# EUROPÄISCHE PATENTSCHRIFT

(11) **EP 3 054 661 B1**
(45) Veröffentlichungstag und Bekanntmachung des Hinweises auf die Patenterteilung: **01.04.2020**
(21) Anmeldenummer: 15000342.4
(22) Anmeldetag: 06.02.2015
(51) Int. Cl.: H04M 11/06, H04L 12/64

(54) **Verfahren zur Übertragung von Daten in einem IP-basierten Telefonnetz**
Method for transmitting data in an IP-based telephone network
Procédé destinée à la transmission de données dans un réseau téléphonique IP

(43) Veröffentlichungstag der Anmeldung: 10.08.2016
(73) Patentinhaber: Deutsche Telekom AG, 53113 Bonn (DE)
(72) Erfinder: Wüst, Stefan, 64839 Münster (DE)
(74) Vertreter: Raible Deissler Lehmann Patentanwälte PartG mbB

(56) Entgegenhaltungen:
- EP-A1- 1 513 044
- EP-A2- 2 073 525
- US-A1- 2009 257 345
- US-A1- 2013 315 052
- US-B1- 6 259 695

## Beschreibung

Die vorliegende Erfindung betrifft ein Verfahren zur Übertragung von Daten, später primäre Daten genannt, in einem Sprachsignal in einem IP-basierten Telefonnetz, auch VoIP-Netz genannt, mit einer Mehrzahl von Netzelementen. Ferner betrifft die vorliegende Erfindung ein entsprechendes Telefonnetz.

Ein herkömmliches Telefonnetz wurde ursprünglich nur für eine Übertragung von menschlicher Sprache entwickelt. Ein derartiges Telefonnetz wird jedoch darüber hinaus auch heute noch zur Datenübertragung genutzt, wie bspw. für eine Übermittlung von sogenannten Faxen (Kurzform von Telefax bzw. Telefacsimile) sowie für eine "machine-to-machine"-Kommunikation. Für einen Zugang zum Internet wird ein Telefonnetz praktisch nicht mehr genutzt. Bei einer Übertragung von Daten über ein Telefonnetz, unabhängig davon, ob es ein IP-basiertes Telefonnetz oder ein herkömmliches Telefonnetz ist, werden Daten in einzelne Bits serialisiert und diese Serie von Bits in Töne umgewandelt, so dass sie über das Telefonnetz übertragen werden können. Die seriellen Daten können die in einem Faxgerät nacheinander abgetasteten Bildpunkte eines auf Papier vorliegenden Dokumentes sein, die Daten einer Datei eines Computers, die Bit für Bit in einen seriellen Datenstrom geleitet werden oder jede andere Art von Daten, die für die serielle Übertragung aufbereitet wurden. Ob diese seriellen Daten synchron oder asynchron übertragen werden sollen, ist dabei unerheblich. Die seriellen Daten werden nach einem der seit Jahren etablierten Verfahren zur Datenübertragung im Telefonnetz in Töne, sogenannte Modemtöne, umgewandelt, so dass sie im Telefonnetz in einem Frequenzband übertragen werden können, das eigentlich für eine Übertragung von menschlicher Sprache vorgesehen ist, nämlich in dem sogenannten Sprachband. Das Sprachband war früher als der Frequenzbereich von 0,3 ... 3,4 kHz festgelegt. Durch die Digitalisierung der Telefonnetze hat sich der übertragbare Frequenzbereich erweitert. Für eine Datenübertragung im Telefonnetz wird aber nur eine Datenrate von unter 100 kbit/s erreicht, was auch als schmalbandige Übertragung bezeichnet wird.

Eine Übertragung von Daten über Telefonleitungen erfordert eine erheblich höhere Übertragungsqualität als eine entsprechende Übertragung von menschlicher Sprache. Dies gilt sowohl für analoge Übertragungsstrecken, die allerdings heute praktisch nicht mehr in Betrieb sind, als auch für digitale Übertragungsstrecken. Bei digitalen Übertragungsstrecken kann es zu Bitfehlern, zu Schwankungen der Übertragungsrate, einem sogenannten Jitter, und zu einem Bitschlupf aufgrund unterschiedlicher Taktung auf der Übertragungsstrecke kommen.

Mit einer Umstellung der Telefonnetze auf IP-Technik, also einer Einführung eines IP-basierten Telefonnetzes, kommt zusätzlich eine verlängerte Übertragungszeit durch eine sogenannte Paketierungszeit, die üblicherweise 20 ms beträgt, in Verbindung mit einer längeren Übertragungszeit in paketvermittelten IP-Netzen im Vergleich zum leitungsvermittelten PSTN als qualitätsmindernder Faktor hinzu. Des Weiteren führt ein einziger Bitfehler oder Bitschlupf zum Verlust eines ganzen IP-Paketes, was bei einer Sprachübertragung über ein IP-basiertes Telefonnetz zu einer weiteren Qualitätsminderung führt, weil durch diesen einzelnen Bitfehler nicht nur ein Abtastwert von in der Regel 125 Mikrosekunden des Sprachsignals gestört ist, wie bei leitungsvermittelter Technik, sondern das gesamte, in dem verlorenen IP-Paket transportierte Sprachsignal, in der Regel 20 ms, verloren ist.

Aufgrund der hohen Qualität heutiger Übertragungsnetze sind jedoch derartige Bitfehler selten, so dass ein Paketverlust bei einer IP-Übertragung nur sehr selten auftritt. Die angesprochene längere Übertragungszeit spielt bei einer Datenübertragung, insbesondere einer Faxübertragung keine große Rolle, da es sich hierbei nicht um einen Dialog handelt, sondern in der Regel lediglich um eine Übertragung in nur eine Richtung. In der entgegengesetzten Richtung bzw. der Rückwärtsrichtung wird lediglich nach Übertragung eines Datenblockes eine kurze, sogenannte Quittung übertragen, was jedoch weniger zeitkritisch ist als ein menschlicher Dialog.

Zu Problemen führt jedoch die Tatsache, dass ein IP-basiertes Telefonnetz nicht synchron, d. h. asynchron zu entsprechenden Endstellen ist und damit die Endstellen keine Takte besitzen, die zueinander synchronisiert sind, wie das im herkömmlichen leitungsvermittelten digitalen Telefonnetz, wie z. B. in dem heute digitalen PSTN und dem ISDN, mit einem zentralen Takt der Fall ist. Diese synchronen Takte werden jedoch für die Digitalisierung benötigt. Die im Sprachband vorliegenden Töne der menschlichen Sprache bzw. die Modemtöne liegen als analoges Signal vor und müssen für die Übertragung in einem digitalen Telefonnetz digitalisiert werden. Die Digitalisierung erfolgt dadurch, dass das analoge Signal in kurzen Abständen, in der Regel 8000 mal pro Sekunde, abgetastet wird, und jeder momentan gemessene Wert der analogen Stärke des Signals in einem Zahlenwert dargestellt wird, der im weiteren digital übertragen wird. Diese digitale Übertragung ist im Grunde auch eine Datenübertragung, sie wird hier sekundäre Datenübertragung genannt, weil der Inhalt der eigentlich zu übertragenden Daten, welche hier deshalb, wie oben angekündigt, primäre Daten genannt werden, aus den sekundären Daten nicht ohne weiteres ersichtlich sind. Die Digitalisierung erfolgt in einem Analog-Digital-Umsetzer auf einer jeweiligen Sendeseite während in einem Digital-Analog-Umsetzer auf einer entsprechenden Empfangsseite die Umsetzung zurück in ein analoges Signal erfolgt. Da eine Übertragung im Telefonnetz immer duplex erfolgt, also gleichzeitig Senden und Empfangen, wenn auch häufig bei der Datenübertragung in eine Richtung nur kurze Quittungen übertragen werden und bei Sprachübertragung in der Regel einer nur zuhört, aber trotzdem seine Stille übertragen wird, sind auf jeder Seite einer Verbindung in der Regel Analog-Digital-Umsetzer und Digital-Analog-Umsetzer in einer Einheit zusammengefasst. Diese Einheit wird im Weiteren A-D/D-A-Umsetzer genannt. Die Umsetzung des digitalisierten Signals zurück in ein analoges Signal muss in genauso vielen Schritten pro Sekunde erfolgen, wie das analoge Signal bei der Digitalisierung abgetastet wurde. Der Takt des D-A-Umsetzers bei einer empfangenden Endstelle einer Verbindung muss deshalb identisch dem Takt des A-D-Umsetzers bei einer entsprechend sendenden Endstelle der entsprechenden Verbindung sein.

Ist der Takt beim Empfänger, d. h. bei der empfangenden Endstelle zu gering, können nicht alle ankommenden Abtastwerte verarbeitet werden und es müssen immer wieder Abtastwerte weggeworfen werden.

Ist der Takt demgegenüber bei der empfangenden Endstelle zu hoch, stehen nicht genügend Abtastwerte zur Umsetzung zurück in das analoge Signal zur Verfügung und es müssen zusätzliche Abtastwerte geschätzt werden.

Beides führt zu Störungen im Sprachsignal, wodurch die Modemtöne verfälscht werden und damit die primäre Datenübertragung gestört wird. Dadurch ist in einem IP-basierten Telefonnetz, auch VoIP-Netz genannt, oft nicht möglich mehr als zehn Seiten eines Faxes fehlerfrei zu übertragen. Dies ist nicht zuletzt dadurch begründet, dass die meisten im Gebrauch befindlichen Faxgeräte aus der Zeit des PSTN stammen und eine höhere Zahl an Übertragungsfehlern in IP-basierten Netzen als grundsätzliche Leitungsfehler interpretieren und aufgrund dessen eine Übertragung abbrechen. Moderne Faxgeräte besitzen zwar grundsätzlich eine Technik zur Fehlerkorrektur, zu häufige Fehler führen aber auch dort zum Abbruch und nicht alle Faxgeräte auf dem Markt sind schon mit dieser Technik ausgestattet.

Die genannten Probleme treten nicht nur bei der Übertragung von Faxen auf, sondern bei allen Übertragungsverfahren, die für das Sprachband modulierte Modemtöne über ein IP-basiertes Netz verwenden. Bei vielen Anwendungen, die eine Übertragung von Daten verwenden, werden durch Nutzung sichernder Übertragungsprotokolle zwar Übertragungsfehler erkannt und fehlerhafte Datensequenzen wiederholt, häufige Wiederholungen verlangsamen jedoch die nutzbare Datenrate. Ebenso treten diese Probleme bei einer digitalen synchronen Datenübertragung im ISDN-Verfahren (z. B. 64 kbit/s unrestricted) auf, die gemäß RFC4040 auch über IP-basierte Telefonnetze möglich ist, weil die Takte der S0-Busse jeweils dieselben sind, wie die Takte der A-D/D-A-Umsetzer und sich Taktunterschiede genauso störend auswirken. Ein SO-Bus ist eine Schnittstelle innerhalb einer ISDN-Basisanschluss-Installation. Ein SO-Bus ermöglicht den Anschluss von ISDN-Endgeräten.

Das Problem besteht darin, dass die Takte der A-D/D-A-Umsetzer, die im IP-basierten Telefonnetz verwendet werden, wenn auch geringfügig, voneinander abweichen.

Die A-D/D-A-Umsetzer im herkömmlichen digitalen Telefonnetz befinden sich bei analogen Telefonanschlüssen in den Teilnehmerbaugruppen von entsprechenden Vermittlungsstellen und sind dort mit einem zentralen Takt verbunden. Bei digitalen Telefonanschlüssen, meist ISDN-Anschlüsse genannt, befinden sich die A-D/D-A-Umsetzer in entsprechenden Geräten beim Kunden, im weiteren Endgeräte genannt. Diese Endgeräte können digitale Telefone sein, digitale Nebenstellenanlagen mit analogen Anschlüssen oder beliebige andere Endgeräte mit der Funktion zur Umsetzung von Tönen von analoger in digitale Form und umgekehrt. Die Töne der menschlichen Sprache oder Modemtöne werden allgemein auch Tonsignale oder einfach Signale genannt. Die genannten Endgeräte, die Töne zwischen analogem und digitalem Signal für das Telefonnetz umsetzen, erhalten einen Takt über den digitalen Telefonanschluss zugeführt und sind deshalb ebenfalls synchron.

Im IP-basierten Telefonnetz können sich diese A-D/D-A-Umsetzer ebenfalls in zentralen Teilnehmerbaugruppen beim Netzbetreiber befinden, sofern noch analoge Telefonanschlüsse angeboten werden. In der Regel befinden sie sich aber in sogenannten IADs beim Kunden oder in IP-Telefonen, die manchmal als SoftPhone, d. h. als Softwarelösung in Computern verschiedener Größe, also auch Smartphones und Tablets, ausgeführt sind. IADs (Integrated Access Device) sind kombinierte Geräte, die mehrere Funktionen ausführen, wie z.B. Breitbandmodem, PPPoE-Client, IP-Router, LAN-Switch, WLAN-Access-Point und Funktion für das IP-basierte Telefonnetz. Die "Funktion für das IP-basierte Telefonnetz", nämlich, dass das analoge Signal im Sprachband beim Sender bzw. bei der sendenden Endstelle digitalisiert wird und in IP-Pakete zur Übertragung im IP-basierten Telefonnetz verpackt wird, die dann beim Empfänger bzw. bei der empfangenden Endstelle ausgepackt werden und das enthaltene digitale Signal wieder in ein analoges Signal zurückgewandelt wird, kann als IP-basierte Telefonanlage, also mit Anschlüssen für mehrere Telefone und lokaler Vermittlungsfunktion ausgeführt sein, oder nur in einem sogenannten IP-Analog-Adapter bestehen, der die Funktionen des IP-basierten Telefonnetzes auf einen einzigen analogen Anschluss zur Verwendung mit einem herkömmlichen analogen Telefon, Faxgerät oder schmalbandigem Modem umsetzt.

In dieser "Funktion für das IP-basierte Telefonnetz" wiederum entsteht das Problem bei einer Generierung von Takten auf beiden Seiten einer Telefonverbindung, weil diese Takte nicht synchronisiert sind.

US 2009/257345 A1 beschreibt ein adaptives Telekommunikationssystem zum Transport von Datenverkehr über ein Netzwerk, wobei der Datenverkehr überwacht wird und der Betriebsmodus vor oder während eines Anrufs auf Basis von aktuellen Netzwerkänderungen, des Verbindungstyps oder des Datenverkehrs adaptiv geändert wird.

EP 1 513 044 A1 beschreibt ein Verfahren zur Synchronisation von Empfangsgeräten, wobei als Zeitbasis ein externes Signal, der sogenannte Network Timeserver verwendet wird.

EP 2 073 525 A2 beschreibt eine skalierbare VoIP-Telefonteilnehmerschaltung.

US 2013/0315052 A1 beschreibt ein Modem zur adaptiven Steuerung einer Faxübertragung über das Internetprotokoll.

US 6,259,695 B1 beschreibt ein Verfahren zur Ankopplung eines Paktetvermittlungsnetzes mit Realzeitdatenströmen von verschiedenen Quellen, bspw. eines leitungsvermittelten Netzes.

Es war demnach eine Aufgabe der vorliegenden Erfindung eine Möglichkeit vorzusehen, die oben genannten Probleme zu vermeiden, um eine möglichst störungsfreie Datenübertragung in einem IP-basierten Telefonnetz, d. h. einem VoIP-Netz zu ermöglichen.

Zur Lösung der genannten Aufgabe schlägt die vorliegende Erfindung ein Verfahren mit den Merkmalen des unabhängigen Patentanspruchs 1 vor. Ferner wird ein entsprechendes Telefonnetz mit den Merkmalen des Patentanspruchs 26 vorgestellt. Ausgestaltungen der Erfindung sind den jeweiligen Unteransprüchen und der Beschreibung sowie den Zeichnungen zu entnehmen.

Gemäß Patentanspruch 1 wird ein Verfahren zur Übertragung von Daten mit Modemtönen in einem Sprachsignal in einem IP-basierten Telefonnetz mit einer Mehrzahl von Netzelementen, über eine Verbindung zwischen mindestens einer ersten Endstelle und mindestens einer zweiten Endstelle vorgeschlagen, bei dem die Daten in Modemtöne umgewandelt, diese Modemtöne über eine Digitalisierung in bei den Endstellen jeweilig angeordneten Analog-Digital-Umsetzern mit einem Schrittakt abgetastet, die dabei entstandenen Abtastwerte in VoIP-Paketen über die Verbindung zwischen der mindestens einen ersten Endstelle und der mindestens einen zweiten Endstelle übertragen werden und dort in den jeweiligen Digital-Analog-Umsetzern zurück in Modemtöne umgesetzt werden, wobei sich bei den Endstellen jeweilig angeordnete Analog-Digital-Umsetzer und Digital-Analog-Umsetzer auf den Schrittakt synchronisieren, wobei die Synchronisation dadurch erfolgt, dass die zweite Endstelle als die die VoIP-Pakete empfangende Endstelle den Schrittakt für eine Umsetzung des für die Übertragung im IP-basierten Telefonnetz digitalisierten Sprachsignals zurück in ein analoges Sprachsignal erzeugt und diesen Schrittakt aus Zahl und zeitlichem Eintreffen der Abtastwerte des digitalisierten Sprachsignals ermittelt und sich somit auf die empfangenen VoIP-Pakete der Verbindung synchronisiert. Das bedeutet, dass die Takte der A-D/D-A-Umsetzer auf den beiden Seiten der Telefonverbindung, d. h. bei der sendenden sowie bei der empfangenden Endstelle nicht wie bislang üblich erzeugt sondern vielmehr miteinander synchronisiert werden. Zwar war die bislang vorgesehene Erzeugung der Takte relativ genau, jedoch auf beiden Seiten einer Telefonverbindung voneinander unabhängig, so dass im Rahmen einer unvermeidbaren Toleranz keine Synchronität auf beiden Seiten einer Telefonverbindung entstehen konnte.

Die vorliegende Erfindung bezieht sich, wie oben beschrieben, auf die "Funktion für das IP-basierte Telefonnetz", in der das analoge Signal im Sprachband beim Sender bzw. bei der sendenden Endstelle digitalisiert wird und zur Übertragung im IP-basierten Telefonnetz in IP-Pakete verpackt wird, die deshalb auch VoIP-Pakete genannt werden, die dann beim Empfänger bzw. bei der empfangenden Endstelle wieder ausgepackt werden und das enthaltene digitale Signal wieder zurück in ein analoges Signal umgesetzt wird. Die vorliegende Erfindung bezieht sich insbesondere auf die dabei notwendigen Takte und deren Generierung.

Die vorliegende Erfindung soll auch Lösungen einschließen, bei denen die "Funktion für das IP-basierte Telefonnetz" in zwei Teileinheiten ausgeführt ist, die durch einen sogenannten ISDN-SO-Bus verbunden sind. Hierbei führt die eine Teileinheit die A-D/D-A-Umsetzung aus und wird durch den SO-Bus von außen getaktet. Dies können herkömmliche ISDN-Telefonanlagen oder einfache ISDN-Analog-Adapter sein. Die andere Teileinheit führt das Ein- und Auspacken der VoIP-Pakete aus und stellt den Takt bereit. Die Erfindung bezieht sich hierbei insbesondere auf die Teileinheit, die den Takt generiert und bereitstellt.

Die vorliegende Erfindung schließt weiterhin Lösungen ein, bei denen die Modemtöne nicht als analoge Signale erzeugt werden, sondern primäre Daten durch digitale Signalverarbeitung direkt als digitalisierte Modemtöne auf einer oder auf beiden Seiten der Datenübertragung über das Telefonnetz verarbeitet werden. Erfindungsgemäß ist es unerheblich, ob eine entsprechende Baugruppe, die das erfindungsgemäße Verfahren ausführt, zentral, bspw. in Form eines Media-Gateway bzw. Voice-Gateway bei einem Netzbetreiber, oder dezentral bei einem Netzbetreiber bspw. in Form einer Teilnehmerbaugruppe am Netzzugangspunkt oder als funktionale Einheit beim Kunden (IAD) ausgeführt ist. Eingeschlossen sind auch Übergänge in Netze anderer Betreiber und Übergänge in Netze anderer Technologien, bspw. in das herkömmliche Telefonnetz. In diesem Fall, insbesondere beim Übergang in das herkömmliche Telefonnetz, sind Vorkehrungen zu treffen, dass in diesem Netz vorhandene Takte, so z. B. der zentrale Takt des PSTN, bei der Realisierung berücksichtigt werden.

In einer ersten Variante des erfindungsgemäßen Verfahrens erfolgt die Synchronisation auf die empfangenen VoIP-Pakete, d. h. die A-D/D-A-Umsetzer in den Endstellen, d. h. auf beiden Seiten der entsprechenden Telefonverbindung, stellen sich aufeinander ein, so dass sie synchronisiert sind. Dabei kann als wesentliche Funktionserweiterung ein zentrales Netzelement den Takt vorgeben, auf den sich beide bzw. alle Endstellen synchronisieren. In alternativer Ausgestaltung wird ein hochgenauer zentraler Takt auf beiden Seiten der Telefonverbindung empfangen, der separat zugeführt wurde, der von beiden Endstellen für die A-D/D-A-Umsetzer verwendet wird. Bei beiden Ausgestaltungen ist eine erfindungsgemäße Synchronisation der Takte sichergestellt. Als Sonderfall sind in einer weiteren Ausgestaltung die Endstellen als Endgeräte mit vollkommen digitaler Signalverarbeitung ausgeführt. Da hier eine Verarbeitung der sekundären Daten in Modemtöne und weiter in primäre Daten durch digitale Signalverarbeitung direkt erfolgen kann, ist eine Synchronisierung nicht unbedingt erforderlich, wenn diese Verarbeitung schnell genug erfolgt.

Die beschriebene Synchronisierung auf die empfangenen VoIP-Pakete erfolgt dadurch, dass der jeweilige A-D-Umsetzer auf der Sendeseite, d. h. auf Seiten der sendenden Endstelle den Takt vorgibt und der jeweilige D-A-Umsetzer auf der Empfangsseite, d. h. auf Seiten der empfangenden Endstelle sich darauf einstellt. Es ist dabei weder notwendig noch sinnvoll, dass sich auf der jeweiligen Empfangsseite sowohl die erste auf die zweite wie auch die zweite auf die erste Endstelle synchronisieren. Es genügt, wenn sich das Endgerät auf einer Seite synchronisiert und das auf der anderen Seite den Takt vorgibt. Wenn ein Endgerät seinen Takt auf den empfangenen Takt des von der anderen Seite empfangenen digitalisierten Signals synchronisiert hat und das von ihm zu sendende Signal mit demselben Takt abtastet, ist damit eine Synchronisierung der beiden Takte auf beiden Seiten der Telefonverbindung sichergestellt, da natürlicherweise das Endgerät auf der anderen Seite den von ihm für die Abtastung des zu sendenden Signals verwendeten Takt auch für die Umsetzung des digitalisierten Signals zurück in ein analoges Signal verwendet, weil dies die technisch einfachste Lösung darstellt.

Die Synchronisierung des Taktes kann dadurch erfolgen, dass die zweite Endstelle als die die VoIP-Pakete empfangende Endstelle den Schrittakt für die Umsetzung des für die Übertragung im IP-basierten Telefonnetz digitalisierten Sprachsignals zurück in ein analoges Sprachsignal aus der Zahl und dem zeitlichen Eintreffen der in den VoIP-Paketen empfangenen Abtastwerte des Sprachsignals ermittelt. Das bedeutet, dass die empfangende Endstelle nicht ihren eigenen Takt nutzt, sondern den Takt aus dem Takt der empfangenen VoIP-Pakete generiert. Dabei wird das zeitliche Eintreffen gemäß Anspruch 3 über den gemessenen zeitlichen Abstand der empfangenen VoIP-Pakete ermittelt und die Frequenz des Schrittaktes, also die Taktgeschwindigkeit, gemäß Anspruch 4 durch Division der Anzahl der in den empfangenen VoIP-Paketen enthaltenen Abtastwerte durch den Mittelwert des zeitlichen Abstandes der empfangenen VoIP-Pakete. Diese Mittelwertbildung erfolgt gemäß Anspruch 5 in einem Jitterbuffer, in den die empfangenen Abtastwerte eingelesen werden und durch den Schrittakt gesteuert wieder ausgelesen werden. Über eine langsame Regelschleife wird dabei der Schrittakt so nachgeregelt, dass der Jitterbuffer weder leer- noch überläuft.

Als Jitter (englisch für "Fluktuation" oder "Schwankung") wird in der Netzwerktechnik eine Varianz einer Laufzeit von IP-Paketen bezeichnet. Dadurch kann es vorkommen, dass ein IP-Paket, das im IP-Netz schneller übermittelt werden kann, ein anderes überholt, das langsamer übermittelt wird. Damit auch langsamere IP-Pakete in der empfangenden Endstelle ausgewertet werden können, muss auf diese gewartet werden. Diese Funktion übernimmt ein sogenannter Jitterbuffer, korrekt eigentlich de-jitter-buffer, ein spezieller Datenpuffer im jeweiligen Empfangspfad eines Endgerätes, dessen Länge sich üblicherweise adaptiv auf die längste vorkommende Laufzeit eines IP-Pakets der jeweiligen Verbindung einstellt. Dadurch vergrößert sich zwar die Laufzeit zusätzlich, da jedoch wie oben erwähnt, eine kurze Laufzeit für Sprachdialog wichtiger ist als für die Übertragung von Daten im Telefonnetz, wird der Jitterbuffer für die Übertragung von Sprache im IP-basierten Telefonnetz etwas knapper eingestellt als für die Übertragung von Daten, also die Übertragung von Modemtönen.

Die erwähnte Frequenz des Schrittaktes des D-A-Umsetzers errechnet sich wie beschrieben aus dem gemessenen gemittelten zeitlichen Abstand der empfangenden IP-Pakete, insbesondere der VoIP-Pakete, und der Anzahl der Abtastwerte des enthaltenen Sprachsignals in den empfangenen VoIP-Paketen. Ist bspw. der Mittelwert des zeitlichen Abstands der empfangenen VoIP-Pakete 19,995 ms und enthält ein VoIP-Paket 160 Abtastwerte, so ergibt sich ein Takt von 160/19, 995 ms = 8002 kHz.

Sollten ab und zu Pakete verloren gehen, was in modernen IP-Netzen sehr selten der Fall ist, müssen diese Pakete entsprechend ersetzt werden. Dies erfolgt in der Regel durch übliche PLC-Verfahren, um keine entsprechend große Abweichung bei der Mittelwertbildung des zeitlichen Abstandes der empfangenen VoIP-Pakete zu erzeugen. Gemäß Anspruch 6 werden dabei verlorene Pakete durch selbst generierte VoIP-Pakete mit gleicher Länge des enthaltenen Sprachsignals ersetzt, also genauso vielen Abtastwerten, wie im verlorenen Paket enthalten waren. Bei einer Telefonverbindung in einem IP-basierten Telefonnetz kann man davon ausgehen, dass ein verwendetes Digitalisierungsverfahren, also die Frequenz des Schrittaktes und die Zahl der Abtastwerte in einem VoIP-Paket, während einer Telefonverbindung, wenn überhaupt, nur sehr selten geändert wird, also aufeinanderfolgende VoIP-Pakete die gleiche Länge besitzen.

Ferner kann ein zentrales Netzelement im IP-basierten Telefonnetz vorgesehen werden, das den Takt vorgibt. Ein solches zentrales Netzelement ist in den meisten IP-basierten Netzen bereits im Einsatz und erfüllt vielfältige Aufgaben zur Verarbeitung von VoIP-Paketen. VoIP-Pakete sind die IP-Pakete einer IP-basierten Telefonverbindung, die das eigentliche Sprachsignal, in dem im Falle der Datenübertragung Modemtöne enthalten sind, tragen, auch Medienstrom genannt. Im Gegensatz dazu gibt es ferner IP-Pakete, die die Signalisierung transportieren, also die Befehle zur Verbindungssteuerung wie Verbindungs- auf- und -abbau. Solche zentralen Netzelemente, durch die die VoIP-Pakete heute schon geleitet werden, werden bspw. unter anderem RTP-Relais, SBC, BGF, Voice-Gateway genannt und dienen zum Beispiel zur Behebung von NAT(Network Address Translation)-Problemen, zur Sicherung von Netzübergängen, zur Erfüllung gesetzlicher Vorgaben wie unter anderem der Abrechnungsgenauigkeit, oder auch zum Transcoding. Dadurch, dass das zentrale Netzelement den Takt vorgibt, sind die Schrittakte aller Telefonverbindungen zu einer Endstelle, die mehrere Telefonverbindungen gleichzeitig aufrecht erhält, identisch, was die Technik der Endstellen stark vereinfacht, weil sie sich nur einmal auf einen Takt synchronisieren und dieser dann für alle gleichzeitigen Telefonverbindungen genutzt werden kann.

Als wesentliche Funktionserweiterung wird nunmehr gemäß Anspruch 7 und 8 vorgeschlagen, dass ein solches zentrales Netzelement, durch das eine Mehrzahl von Telefonverbindungen laufen, und das jeweils von allen VoIP-Paketen dieser Telefonverbindungen durchlaufen wird, alle das zentrale Netzelement durchlaufenden VoIP-Pakete puffert, um sie genau im zeitlichen Abstand der Dauer des in den jeweiligen VoIP-Paketen enthaltenen Sprachsignals auszusenden, wobei es den zentralen Takt als Zeitbasis dafür heranzieht. Dadurch sind sie entsprechend dem zum gewählten Digitalisierungsverfahren gehörenden Schrittakt der jeweiligen Telefonverbindung mit dem zentralen Takt synchron. Es ist also gar nicht notwendig, dass dieses zentrale Netzelement den jeweiligen Takt eines jeweiligen Codier- bzw. Digitalisierungsverfahrens für die Sprachübertragung, bzw. die Übertragung von Modemtönen im Sprachsignal, kennt und nachbildet. Da sich aus dem Takt und dem Digitalisierungsverfahren die Zeitbasis ergibt, kann das zentrale Netzelement auch die Zeit als Basis vorgeben. Die Endstellen können daraus anhand des Digitalisierungsverfahrens den Takt ermitteln und für die jeweils von ihnen umfassten A-D/D-A-Umsetzer nutzen, wie dies gemäß weiterer Ausgestaltung vorgesehen ist.

In einem großen IP-basierten Telefonnetz ist es nicht möglich, dass alle VoIP-Pakete durch genau ein zentrales Netzelement geführt werden. Zur Lastverteilung sind mehrere solche Netzelemente nötig. Damit sich eine Endstelle nur einmal synchronisieren muss, auch wenn dorthin mehrere IP-basierte Telefonverbindungen bestehen, die über unterschiedliche zentrale Netzelemente geführt werden, müssen die Takte dieser mehreren Telefonverbindungen auch in diesem Fall zueinander synchron sein. Da es in einem großen IP-basierten Telefonnetz nicht möglich ist, dass diese mehreren Telefonverbindungen, die zu einer bestimmten Endstelle gehen, über das selbe zentrale Netzelement geführt werden, wodurch die Takte der beiden Telefonverbindungen synchron wären, müssen die mehreren Netzelemente zueinander synchron sein. Dies wird gemäß weiterer Ausgestaltung sinnvollerweise durch einen zentralen, über ein Taktnetz übertragenen Takt bewerkstelligt. Dementsprechend wird gemäß Anspruch 9 bis 12 als zentrales Netzelement in einem IP-basierten Telefonnetz aus einer Mehrzahl solcher zentraler Netzelemente ein beliebiges Netzelement aus der Gruppe bestehend aus RTP-Relais, SBC, BGF, Voice-Gateway gewählt, das dazu konfiguriert ist, es durchlaufende VoIP-Pakete soweit zu analysieren, dass es von der Dauer des darin enthaltenen Sprachsignals Kenntnis erhält und es durchlaufende VoIP-Pakete genau im zeitlichen Abstand der Dauer des jeweilig enthaltenen Sprachsignals weitersendet, wobei in dem IP-basierten Telefonnetz mehrere zentrale Netzelemente existieren und dergestalt im IP-basierten Telefonnetz verteilt werden, dass jede Telefonverbindung mindestens ein solches zentrales Netzelement durchläuft und die Zeitbasis aller dieser zentralen Netzelemente gemäß dem zentralen Takt gleich ist.

Das gilt jedoch nicht nur für das große IP-basierte Telefonnetz eines einzigen Betreibers, sondern muss auch beim Verbund der Netze mehrerer Betreiber sichergestellt sein, denn das IP-basierte Telefonnetz als Netzverbund setzt sich aus den IP-basierten Telefonnetzen vieler Netzbetreiber zusammen. Deshalb müssen sich gemäß Anspruch 13 die entsprechenden zentralen Netzelemente in den IP-basierten Telefonnetzen verschiedener Betreiber zueinander synchronisieren. Die Synchronisierung der Netze kann über ein gemeinsames bzw. synchronisiertes Taktnetz erfolgen, wie das im herkömmlichen Telefonnetz der Fall ist. Kleine IP-basierte Telefonnetze können sich dabei auf ein großes IP-basiertes Telefonnetz auch mit dem voranstehend beschriebenen Verfahren synchronisieren, nämlich dass das kleine Netz in einem die VoIP-Pakete empfangenden Netzelement einen Schrittakt für eine Umsetzung der für die Übertragung im IP-basierten Telefonnetz digitalisierten Signale zurück in analoge Signale erzeugt und diesen Schrittakt aus einer Zahl und einem zeitlichen Eintreffen von Abtastwerten ermittelt und sich somit auf die empfangenen VoIP-Pakete der Verbindung synchronisiert. Dieses Verfahren kann in jeden Fall für diese Synchronisation verwendet werden, oder jedes andere mögliche Verfahren.

Mindestens in der Überganszeit, solange das bisherige Telefonnetz (PSTN) neben dem neuen IP-basierten Telefonnetz koexistiert, müssen den Endstellen in den Netzen beider Technologien auch Telefonverbindungen mit Endstellen im jeweiligen Netz der anderen Technologie ermöglicht werden. Die Synchronisierung der Takte ist auch hier notwendig. Da das PSTN seit jeher einen zentralen Takt besitzt, müssen die genannten zentralen Netzelemente im IP-basierte Telefonnetz, die die sie durchlaufenden VoIP-Pakete genau im zeitlichen Abstand der Dauer des enthaltenen Sprachsignals weitersenden, mit dem Takt des PSTN synchronisiert sein. Hierfür gibt es verschiedene Möglichkeiten, zum Beispiel ein gemeinsames Taktnetz für die unterschiedlichen Technologien. Es ist aber auch möglich, dass die technische Einheit, die die Umsetzung der Telefonverbindungen zwischen den verschiedenen Technologien durchführt, meist Media-Gateway, Voice-Gateway oder Gatekeeper genannt, den Takt von der PSTN-Seite aufnimmt und die VoIP-Pakete mit diesem Takt synchronisiert und genau im zeitlichen Abstand der Dauer des enthaltenen Sprachsignals weitersendet. Natürlich müssen andere zentrale Netzelemente im IP-basierten Telefonnetz, die die VoIP-Pakete genau im zeitlichen Abstand der Dauer des enthaltenen Sprachsignals weitersenden, mit diesem Takt ebenfalls synchronisiert sein.

Dasselbe gilt ebenso für alle anderen Übergänge in andere Technologien zur Übermittlung von Telefonie wie Mobilfunk oder geschlossene Systeme mit firmeneigenem Übertragungsprotokoll wie zum Beispiel Skype.

Die Synchronisierung kann in einer zweiten Variante des erfindungsgemäßen Verfahrens über einen extern zugeführten Takt erfolgen.

Hierbei wird über ein separates Netz den Endstellen, die einen synchronen Takt für die A-D/D-A-Umsetzung benötigen, dieser synchrone Takt extern zugeführt. Zuführungsmedien können funkbasiert, leitungsbasiert oder grundsätzlich auch anders ausgeführt sein .

Beispiele für Systeme, die ein Funksignal mit einem hochgenauen Takt aussenden sind DCF77, GPS und das jeweilige GSM-, UMTS- oder LTE-Funknetz eines einzelnen Mobilfunknetzbetreibers. Die Zeitbasen dieser Takte können in den Endstellen als hochgenaue Zeitbasen für dort benötigte Takte herangezogen werden.

Ein Beispiel für leitungsgebundene Taktverteilung ist synchrones Ethernet (synchE). Übergangsweise kann SDH ebenfalls noch verwendet werden. Beide Systeme stehen bei den meisten Endstellen aber nicht zur Verfügung, weshalb diese nur als mögliche Beispiele genannt werden. Eine Übertragung von Taktsignalen über verschiedene DSL-Varianten wäre zwar denkbar, ist aber derzeit nicht eingeführt. Auch wenn sich die so erhaltenen Taktfrequenzen möglicherweise nicht direkt bei den A-D/D-A-Umsetzern in den Endstellen verwenden lassen, sind die Zeitbasen dieser Takte jedoch geeignet, in den Endstellen als hochgenaue Zeitbasen für dort benötigte Takte herangezogen zu werden.

Sofern die an den Endstellen empfangenen VoIP-Pakete vollständig in Software, also durch digitale Signalverarbeitung verarbeitet werden und diese Verarbeitung schnell genug erfolgt, ist in noch weiterer Ausgestaltung eine Synchronisierung der Takte unter bestimmten Umständen nicht notwendig.

In modernen Modems werden die über die Telefonverbindung empfangenen Signale durch digitale Signalverarbeitung verarbeitet. Hierzu müssen die empfangenen analogen Signale zuerst digitalisiert werden, also eine Analog-DigitalUmsetzung durchgeführt werden. Wurde die entsprechende Telefonverbindung über ein IP-basiertes Telefonnetz geführt, wurde das Signal in einem benachbarten System nahe der empfangenden Endstelle erst von Digital nach Analog umgesetzt. Wird die Verarbeitung des Modemsignals in derselben technischen Einheit durchgeführt, hier als Modem-Endstelle bezeichnet, die auch die VoIP-Pakete auspackt, liegen die für die digitale Signalverarbeitung in dem modernen Modem vorgesehenen Signale bereits digital vor und können so direkt, also ohne vorherige D-A- und dann A-D-Umsetzung verarbeitet werden. Dies spart nicht nur technischen Aufwand, es löst auch das Problem der Taktsynchronisation, denn da keine DA-Umsetzung nötig ist, entfallen auch die damit verbundenen Probleme der Generierung des richtigen Schrittaktes und des leer- oder überlaufenden Jitterpuffers. Dieser ist in Software realisiert und, wenn die Hardware, auf der die Software abläuft schnell genug arbeitet, sozusagen unendlich groß, da er nicht überlaufen kann. Die Software ist in der Lage, die VoIP-Pakete so zu verarbeiten, wie sie eintreffen, ohne sie einem Schrittakt unterwerfen zu müssen. Deshalb kann ein Jitterpuffer auch nicht leerlaufen, denn die Software kann auf die Pakete warten.

Allein für den Rückkanal wäre die Synchronisation auf den empfangenen Takt sinnvoll. Sofern eine solche softwarebasierte Modem-Endstelle überwiegend Daten empfängt, wie das bei Faxservern häufig der Fall ist, ist die Datenmenge für den Rückkanal gering, weil nur kurze Quittungen gesendet werden, die den Jitterpuffer bei der Gegenstelle normalerweise nicht zum Überlauf bringen. Sollen auch große Datenmengen gesendet werden, kann versucht werden, sich auf die empfangenen Quittungen zu synchronisieren, und das Sendesignal mit diesem Takt als Zeitbasis zu senden. Dieses Verfahren ist zwar aufwendig, bei einer softwarebasierten Modem-Endstelle ist diese Einzelsynchronisierung auf jede einzelne Telefonverbindung, wenn über das System mehrere IP-basierte Telefonverbindungen geführt werden, aber weit weniger aufwendig, als dies bei einer hardwarebasierten Modem-Endstelle der Fall wäre bzw. bei einem normalen Gerät mit der oben erläuterten "Funktion für das IP-basierte Telefonnetz" und einem daran angeschalteten Modem.

Weitere Ausgestaltungen der Erfindung ergeben sich aus den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in den Zeichnungen schematisch dargestellt und wird unter Bezugnahme auf die Zeichnungen schematisch und ausführlich beschrieben.
Figur 1 zeigt eine Ausgestaltung einer erfindungsgemäß vorgesehenen Synchronisation in einem VoIP-Netzwerk.
Figur 2 zeigt eine erfindungsgemäß vorgesehene Synchronisation von Endgeräten auf einen Zentraltakt gemäß einer spezifischen möglichen Ausführungsform des erfindungsgemäßen Verfahrens.
Figur 3 zeigt eine Erweiterung von Figur 2 mit mehreren Verbindungen zu einer Endstelle.
Figur 4 zeigt eine erfindungsgemäß vorgesehene Synchronisation eines Taktes in einem Netzverbund und eine Taktverteilung auf alle VoIP-Netzelemente gemäß einer weiteren Ausführungsform des erfindungsgemäßen Verfahrens.
Figur 5 zeigt eine Synchronisation eines Taktes zwischen einem VoIP-Netz und PSTN gemäß einer noch weiteren Ausführungsform des erfindungsgemäßen Verfahrens.
Figur 6 zeigt eine weitere Ausgestaltung einer erfindungsgemäß durchzuführenden Synchronisation durch Zuführung eines zentralen Taktes über ein separates funkbasiertes Taktnetz.
Figur 7 zeigt eine noch andere Ausgestaltung einer erfindungsgemäß durchzuführenden Synchronisierung durch Zuführung eines zentralen Taktes über ein separates kabelgebundesnes Taktnetz.

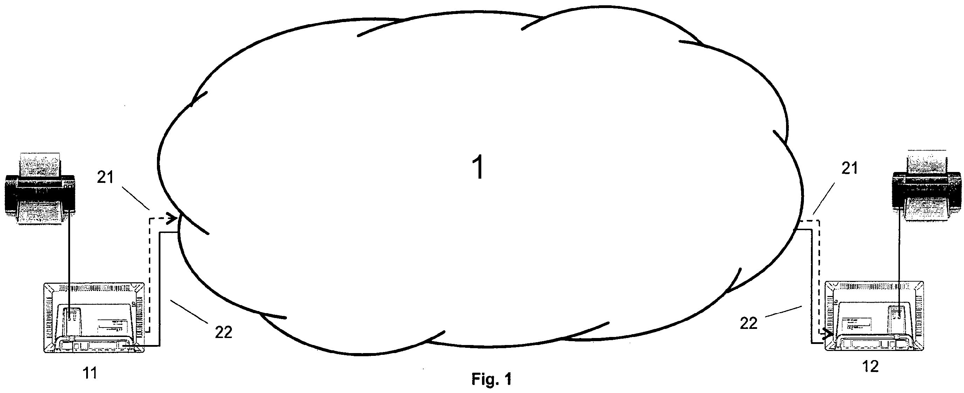

Figur 1 zeigt ein IP-basiertes Telefonnetz 1 mit zwei Endstellen 11 und 12. An den Endstellen 11, 12 befinden sich je ein IAD, in denen unter anderem die oben beschriebene "Funktion für das IP-basierte Telefonnetz" untergebracht ist, also die Funktion zum Ein- und Auspacken der VoIP-Pakete und die A-D/D-A-Umsetzer zum Anschluss eines Gerätes an den analogen Telefonport des IAD, also ein Modem oder Faxgerät. Der Pfeil der gestrichelten Linie 21 deutet die Richtung des Taktes der VoIP-Pakete an, die über Telefonverbindung 22 übertragen werden. Endstelle 12 synchronisiert sich dadurch erfindungsgemäß auf den von Endstelle 11 vorgegebenen Takt.

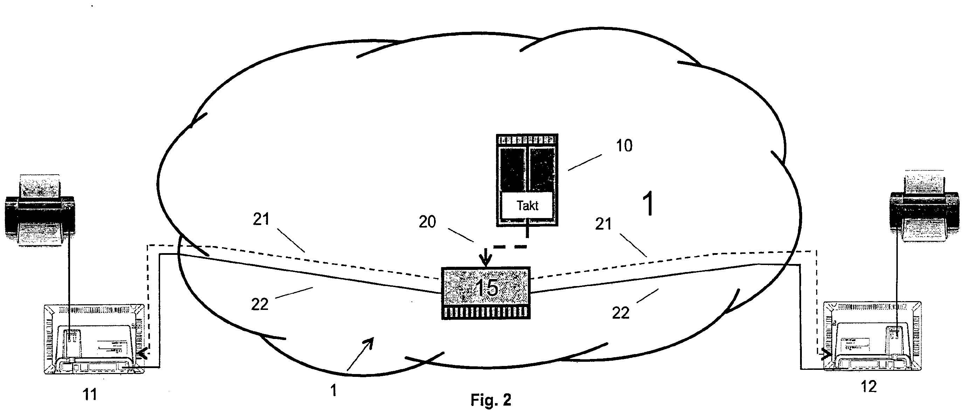

Figur 2 zeigt die Erweiterung von Figur 1 um ein zentrales Netzelement 15, das über einen zentralen Taktgeber 10 einen zentralen Takt 20 erhält, mit dem getaktet es die von beiden Endstellen 11, 12 (Duplex) empfangenen VoIP-Pakete der Telefonverbindung 22 jeweils an die Endstellen 12, 11 weitersendet, so dass sich die Endstellen 11 und 12 auf den empfangenen Takt 21 der VoIP-Pakete und damit auf den zentralen Takt 20 synchronisieren und dadurch miteinander synchronisiert sind.

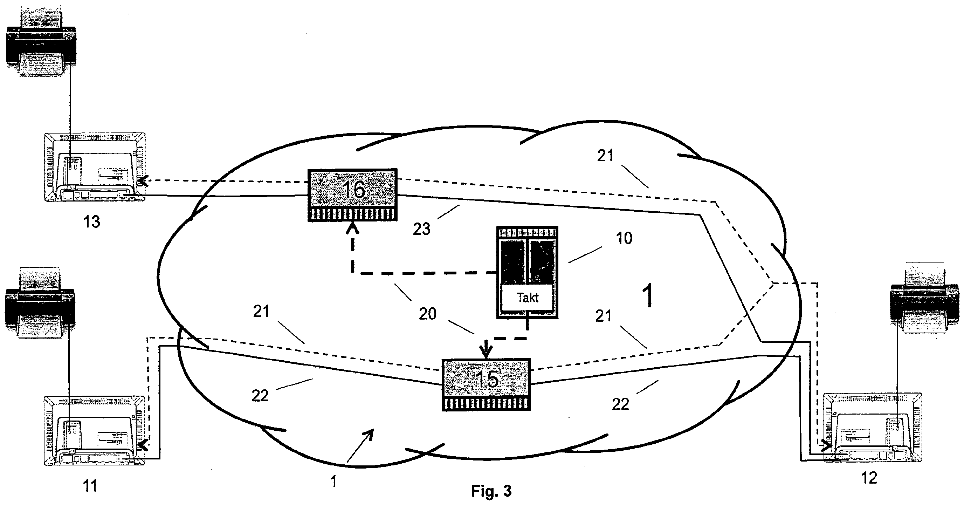

Figur 3 erweitert dieses Bild um eine weitere Endstelle 13, die eine gleichzeitige Telefonverbindung zu Endstelle 12 aufgebaut hat über ein weiteres zentrales Netzelement 16, das mit dem gleichen Takt 20 getaktet ist wie zentrales Netzelement 15 und dadurch die jeweiligen VoIP-Pakete der Telefonverbindung 23 an die Endstelle 12 genauso getaktet weitersendet wie die VoIP-Pakete der Telefonverbindung 22 an die Endstelle 12 weitergesendet werden, so dass die VoIP-Pakete von den beiden Endstellen 11 und 13 bei der Endstelle 12 mit dem identischen Takt ankommen und somit die Endstelle 12 sich nur auf einen einzigen Takt 20 synchronisieren muss, um mit dem Takt beider Gegenstellen 11 und 13 synchron zu sein.

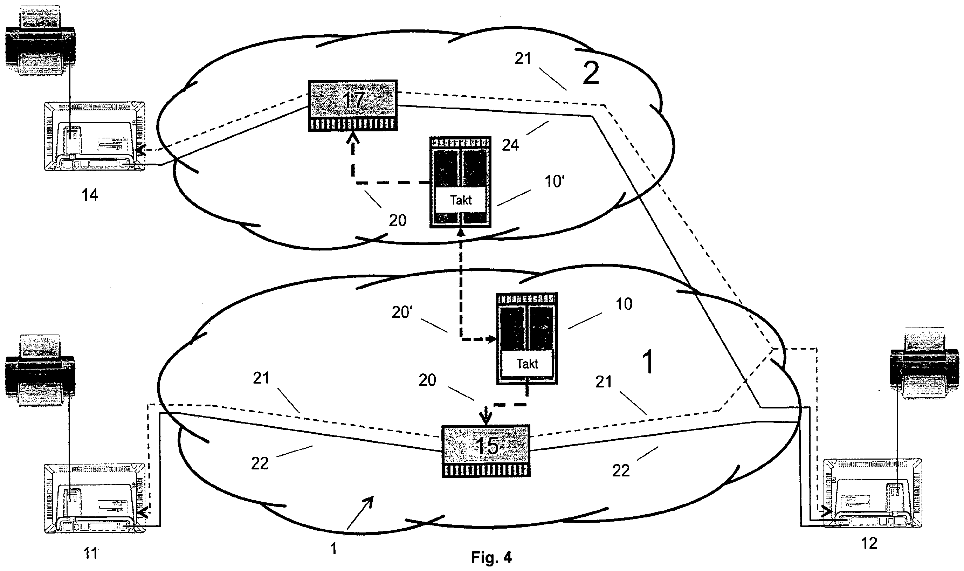

In Figur 4 ist dargestellt, wie eine weitere Endstelle 14, angeschaltet an einem IP-basierten Telefonnetz eines Netzbetreibers 2 eine gleichzeitige Telefonverbindung zu Endstelle 12 über ein weiteres zentrales Netzelement 17 im Netz des Netzbetreibers 2 aufgebaut hat, das mit dem gleichen Takt 20 getaktet ist wie zentrales Netzelement 15 dadurch, dass dieses zentrale Netzelement 17 getaktet ist durch einen zentralen Taktgeber 10' im Netz des Netzbetreibers 2 und beide zentralen Taktgeber durch die Taktleitung 20' sich gegenseitig synchronisieren. Durch den gleichen Takt der zentralen Netzelemente 15 und 17 werden die jeweiligen VoIP-Pakete der Telefonverbindung 24 an die Endstelle 12 genauso getaktet weitergesendet wie die VoIP-Pakete der Telefonverbindung 22 an die Endstelle 12 weitergesendet werden, so dass die VoIP-Pakete von den beiden Endstellen 11 und 14 bei der Endstelle 12 mit dem identischen Takt ankommen und somit die Endstelle 12 sich nur auf einen einzigen Takt 20 synchronisieren muss, um mit dem Takt beider Gegenstellen 11 und 14 synchron zu sein. Die Endstellen 11 und 14 synchronisieren sich dementsprechend ebenfalls auf den Takt 20 durch den Takt 21 der VoIP-Pakete in den jeweiligen Telefonverbindungen 22 und 24.

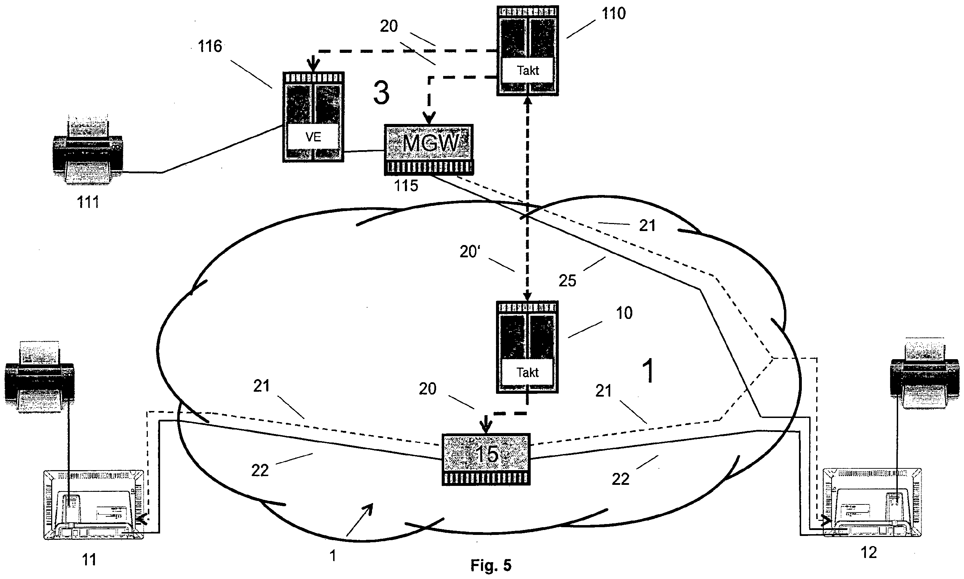

Figur 5 zeigt eine Einbindung eines Überganges zu einem Netz anderer Technologie, im Beispiel das herkömmliche Telefonnetz PSTN 3. Hier befindet sich die Endstelle 111, von der eine Telefonverbindung zu Endstelle 12 im IP-basierten Telefonnetz besteht. Die Synchronisierung der Takte der beiden Endstellen 12 und 111 erfolgt hierbei über die jeweiligen Taktgeber 10 und 110 in den Netzen der beiden Technologien, deren Takte 20 über das jeweilige Taktnetz an das zentrale Netzelement 15 im IP-basierten Telefonnetz sowie das Mediagateway 115 und die Vermittlungsstelle 116 im herkömmlichen Telefonnetz übertragen werden. In dieser Vermittlungsstelle befindet sich der A-D/D-A-Umsetzer, weshalb eine Synchronisierung bis zur Endstelle 111 nicht nötig ist. Die beiden zentralen Taktgeber 10 und 110 synchronisieren sich über die Taktleitung 20'. Somit sind die Takte der A-D/D-A -Umsetzer nicht nur in den Endstellen 11 und 12 miteinander synchron, sondern diese zusätzlich auch mit dem Takt des A-D/D-A-Umsetzers in der Teilnehmerbaugruppe für die Endstelle 111 der Vermittlungsstelle 116.

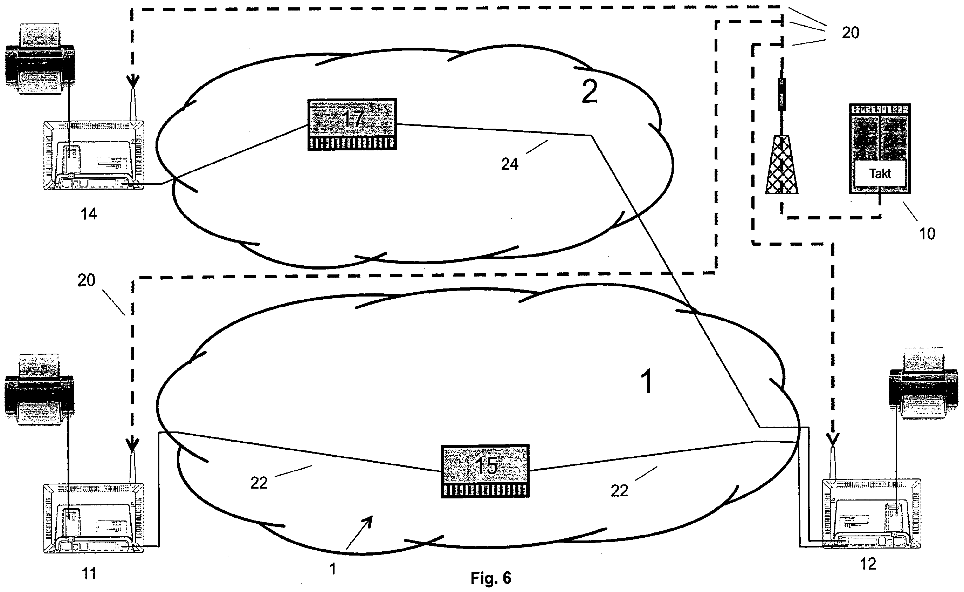

Figur 6 zeigt eine Synchronisierung der Takte der Endstellen 11, 12 und 14 über einen Taktgeber 10, der den Takt 20 über ein funkbasiertes unabhängiges Taktnetz ausstrahlt. Die Endstellen besitzen entsprechende Funkempfänger, um den ausgestrahlten Takt zu empfangen und sich so auf diesen gemeinsamen Takt synchronisieren zu können.

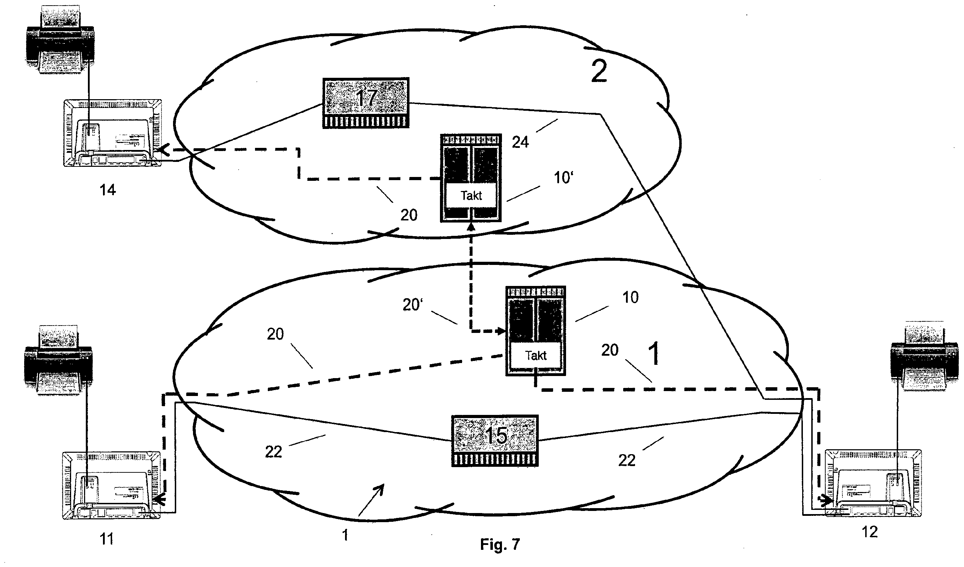

Figur 7 zeigt eine Synchronisierung der Takte der Endstellen 11, 12 und 14 über einen Taktgeber 10 und einen damit synchronisierten Taktgeber 10' in einem anderen Leitungsnetz, die den Takt 20 über ein leitungsbasiertes Taktnetz aussenden, auf den sich die Endstellen synchronisieren.

## Patentansprüche

1. Verfahren zur Übertragung von Daten mit Modemtönen in einem Sprachsignal in einem IP-basierten Telefonnetz (1) mit einer Mehrzahl von Netzelementen, über eine Verbindung zwischen mindestens einer ersten Endstelle (11) und mindestens einer zweiten Endstelle (12), bei dem die Daten in Modemtöne umgewandelt, diese Modemtöne über eine Digitalisierung des Sprachsignals in bei den Endstellen jeweilig angeordneten Analog-Digital-Umsetzern mit einem Schrittakt abgetastet, die dabei entstandenen Abtastwerte in VoIP-Paketen über die Verbindung zwischen der mindestens einen ersten Endstelle und der mindestens einen zweiten Endstelle übertragen werden und von bei den Endstellen jeweilig angeordneten Digital-Analog-Umsetzern zurück in Modemtöne umgesetzt werden, wobei sich die bei den Endstellen jeweilig angeordneten Analog-Digital-Umsetzer und Digital-Analog-Umsetzer auf den Schrittakt synchronisieren, wobei die Synchronisation dadurch erfolgt, dass die zweite Endstelle als die die VoIP-Pakete empfangende Endstelle den Schrittakt für eine Umsetzung des für die Übertragung im IP-basierten Telefonnetz digitalisierten Sprachsignals zurück in ein analoges Sprachsignal erzeugt und diesen Schrittakt aus Zahl und zeitlichem Eintreffen der Abtastwerte des digitalisierten Sprachsignals ermittelt und sich somit auf die empfangenen VoIP-Pakete der Verbindung synchronisiert.

2. Verfahren nach Anspruch 1, bei dem der Schrittakt aus einem gemessenen gemittelten zeitlichen Abstand der empfangenen VoIP-Pakete und der Anzahl von Abtastwerten des in den empfangenen VoIP-Paketen jeweilig enthaltenen Sprachsignals berechnet wird.

3. Verfahren nach Anspruch 2, bei dem eine Frequenz des Schrittaktes aus der Anzahl der Abtastwerte des in den empfangenen VoIP-Paketen jeweilig enthaltenen Sprachsignals dividiert durch den gemessenen gemittelten zeitlichen Abstand der empfangenen VoIP-Pakete berechnet wird.

4. Verfahren nach Anspruch 3, bei dem die Mittelwertbildung des zeitlichen Abstandes der empfangenen VoIP-Pakete in einem Jitterpuffer dergestalt erfolgt, dass der von der empfangenden Endstelle erzeugte Schrittakt in einer Regelschleife abhängig von der Anzahl eintreffender Abtastwerte in den eintreffenden VoIP-Paketen sehr langsam nachgeregelt wird, so dass der Jitterpuffer weder leerläuft noch überläuft.

5. Verfahren nach einem der voranstehenden Ansprüche, bei dem verlorene VoIP-Pakete in dem empfangenden Endgerät durch selbst generierte VoIP-Pakete mit gleicher Länge des enthaltenen Sprachsignals ersetzt werden.

6. Verfahren nach einem der voranstehenden Ansprüche, bei dem ein zentrales Netzelement, durch das eine Mehrzahl von Telefonverbindungen laufen, und das jeweils von allen VoIP-Paketen dieser Telefonverbindungen durchlaufen wird, alle das zentrale Netzelement durchlaufenden VoIP-Pakete puffert, um sie alle gemäß einem zentralen Takt so wieder auszusenden, dass der Schrittakt jeder einzelnen dieses zentrale Netzelement durchlaufenden Telefonverbindung entsprechend einem jeweiligen gewählten Digitalisierungsverfahren mit dem zentralen Takt synchron ist.

7. Verfahren nach Anspruch 6, bei dem das zentrale Netzelement VoIP-Pakete, die es aussendet, dadurch entsprechend dem Schrittakt der jeweiligen Telefonverbindung entsprechend dem jeweiligen gewählten Digitalisierungsverfahren mit dem zentralen Takt synchron aussendet, dass es den zentralen Takt als Zeitbasis dafür heranzieht, die auszusendenden VoIP-Pakete genau im zeitlichen Abstand der Dauer des in den jeweiligen VoIP-Paketen enthaltenen Sprachsignals auszusenden.

8. Verfahren nach Anspruch 6 oder 7, bei dem als zentrales Netzelement ein beliebiges Netzelement in dem IP-basierten Telefonnetz gewählt wird, das dazu konfiguriert ist, es durchlaufende VoIP-Pakete soweit zu analysieren, dass es von der Dauer des darin enthaltenen Sprachsignals Kenntnis erhält.

9. Verfahren nach Anspruch 8, bei dem das Netzelement ausgewählt ist aus der Gruppe bestehend aus RTP-Relais, SBC, BGF, Voice-Gateway.

10. Verfahren nach einem der Ansprüche 6 bis 9, bei dem mehrere zentrale Netzelemente in dem IP-basierten Telefonnetz existieren und dergestalt im IP-basierten Telefonnetz verteilt werden, dass jede Telefonverbindung mindestens ein solches zentrales Netzelement durchläuft, das die es durchlaufenden VoIP-Pakete genau im zeitlichen Abstand der Dauer des jeweilig enthaltenen Sprachsignals weitersendet.

11. Verfahren nach Anspruch 10, bei dem die zentralen Netzelemente, die die sie durchlaufenden VoIP-Pakete genau im zeitlichen Abstand der Dauer des jeweilig enthaltenen Sprachsignals weitersenden, dies gemäß dem zentralen Takt so tun, dass die Zeitbasis für den zeitlichen Abstand aller von diesen zentralen Netzelementen jeweils im zeitlichen Abstand der Dauer des jeweilig enthaltenen Sprachsignals aus- bzw. weitergesendeten VoIP-Pakete identisch ist.

12. Verfahren nach einem der voranstehenden Ansprüche, bei dem mehrere zentrale Netzelemente über IP-basierte Telefonnetze verschiedener Netzbetreiber verteilt sind und sich zueinander synchronisieren.

13. Verfahren nach einem der Ansprüche 6 bis 10, bei dem mehrere zentrale Netzelemente (15, 17) mit Netzübergängen zu anderen Netztechnologien verbunden sind und sich nach einem der voranstehenden Ansprüche oder auf andere Art auf eine gemeinsame Zeitbasis zur Ableitung des Schrittaktes für die Digitalisierung der Sprachsignale synchronisieren.

14. Verfahren nach Anspruch 13, bei dem die anderen Netztechnologien ausgewählt sind aus der Gruppe bestehend aus PSTN, Mobilfunk, proprietäre oder standardisierte Netz- oder Übermittlungssysteme zur Übermittlung von Telefonie oder anderer echtzeitbasierter Sprachübertragung.

15. Verfahren nach einem der voranstehenden Ansprüche, bei dem eine sendende Endstelle, die den Schrittakt für die Abtastung von für die Übertragung im IP-basierten Telefonnetz zu digitalisierende analoge Sprachsignale generiert, für diesen Schrittakt denselben Takt verwendet, den sie als Takt für den Schrittakt für die Umsetzung der für die Übertragung im IP-basierten Telefonnetz digitalisierten Sprachsignale zurück in analoge Sprachsignale gemäß den Ansprüchen 1 bis 4 generiert hat.

16. Verfahren nach Anspruch 1, bei dem die Endstellen im Verbindungsaufbau aushandeln, welche Seite als Taktgeber agiert, wenn kein zentraler Takt empfangen wird.

17. Verfahren nach Anspruch 1, bei dem die Synchronisation dadurch erfolgt, dass der ersten und der zweiten Endstelle (11, 12), die den Schrittakt für die Abtastung von für das Senden in das Telefonnetz zu digitalisierenden analogen Sprachsignalen und für die Umsetzung von aus dem IP-basierten Telefonnetz empfangenen digitalen Sprachsignalen zurück in analoge Sprachsignale erzeugen, dieser Schrittakt aus einem hochgenauen zentralen Takt von extern zugeführt wird.

18. Verfahren nach Anspruch 17, bei dem der zentrale Takt über Funk ausgesendet und zugeführt wird.

19. Verfahren nach Anspruch 18, bei dem das Funksignal durch ein System ausgewählt aus der Gruppe bestehend aus DCF77, GPS, jeweiliges GSM-, UMTS- oder LTE-Funknetz eines einzelnen Mobilfunkbetreibers ausgesendet wird.

20. Verfahren nach Anspruch 17, bei dem der zentrale Takt durch ein zentral getaktetes Trägersignal eines kabelgebundenen Übertragungssystems zugeführt wird.

21. Verfahren nach Anspruch 20, bei dem als kabelgebundenes Übertragungssystem ein System aus der Gruppe bestehend aus SDH, synchrones Ethernet, DSL gewählt wird.

22. Verfahren nach Anspruch 17, bei dem der zentrale Takt durch einen anderen zentralen Takt zugeführt wird.

23. Verfahren nach Anspruch 1, bei dem die Synchronisation dadurch erfolgt, dass alle empfangenen VoIP-Pakete gepuffert werden, und im Bedarfsfall verlorengegangene VoIP-Pakete durch selbst generierte VoIP-Pakete mit gleicher Länge des darin jeweils enthaltenen Sprachsignals ersetzt werden, und diese IP-Pakete so weiterverarbeitet werden, dass das ursprüngliche Signal ohne Fehler durch einen Taktunterschied zwischen der ersten und der zweiten Endstelle übermittelt wird.

24. Verfahren nach Anspruch 23, bei dem empfangene Sprachsignale aus VoIP-Paketen durch digitale Signalverarbeitung so verarbeitet werden, dass die empfangenen Signale keinem lokalen Takt unterworfen werden, sondern in dem Schrittakt vollständig verarbeitet werden können, wie sie empfangen werden.

25. IP-basiertes Telefonnetz (1) das dazu ausgelegt ist ein Verfahren nach einem der Ansprüche 1 bis 24 durchzuführen.

## Claims

1. A method for transmitting data with modem tones in a voice signal in an IP-based telephone network (1) having a plurality of network elements via a connection between at least one first terminal (11) and at least one second terminal (12), wherein the data are converted into modem tones, these modem tones are sampled with a transmission clock signal via a digitization of the voice signal in analog-to-digital converters arranged in each case at the terminals, the resulting sample values are transmitted in VoIP packets via the connection between the at least one first terminal and the at least one second terminal and are converted back into modem tones by digital-to-analog converters arranged in each case at the terminals, wherein the analog-to-digital converters and digital-to-analog converters arranged in each case at the terminals synchronize to the transmission clock signal, wherein the synchronization is effected by the second terminal, as the terminal receiving the VoIP packets, generating the transmission clock signal for converting the voice signal digitized for transmission in the IP-based telephone network back into an analog voice signal and determining this transmission clock signal from the number and time of arrival of the sample values of the digitized voice signal and thus synchronizing itself to the received VoIP packets of the connection.

2. The method according to claim 1, wherein the transmission clock signal is calculated from a measured average time interval between the received VoIP packets and the number of sample values of the voice signal respectively contained in the received VoIP packets.

3. The method according to claim 2, wherein a frequency of the transmission clock signal is calculated from the number of sample values of the voice signal respectively contained in the received VoIP packets divided by the measured average time interval between the received VoIP packets.

4. The method according to claim 3, wherein the averaging of the time interval between the received VoIP packets is carried out in a jitter buffer in such a way that the transmission clock signal generated by the receiving terminal is readjusted very slowly in a control loop as a function of the number of incoming sample values in the incoming VoIP packets, so that the jitter buffer neither runs empty nor overflows.

5. The method according to one of the preceding claims, wherein lost VoIP packets are replaced in the receiving terminal with self-generated VoIP packets containing a voice signal of the same length.

6. The method according to one of the preceding claims, wherein a central network element through which a plurality of telephone connections passes and through which all VoIP packets of said telephone connections pass respectively, buffers all VoIP packets passing through the central network element in order to retransmit them all according to a central clock signal such that the transmission clock signal of each individual telephone connection passing through said central network element is synchronous with the central clock signal according to a respective selected digitizing method.

7. The method according to claim 6, wherein the central network element transmits the VoIP packets it transmits synchronously with the central clock signal according to the transmission clock signal of the respective telephone connection according to the respective selected digitizing method, by using the central clock signal as a time base for transmitting the VoIP packets to be transmitted exactly at the time interval that matches the duration of the voice signal contained in the respective VoIP packets.

8. The method according to claim 6 or 7, wherein any network element in the IP-based telephone network configured to analyze passing VoIP packets to such an extent that it ascertains the duration of the voice signal contained therein is selected as the central network element.

9. The method according to claim 8, wherein the network element is selected from the group consisting of RTP relay, SBC, BGF, voice gateway.

10. The method according to one of claims 6 to 9, wherein a plurality of central network elements exist in the IP-based telephone network and is distributed in the IP-based telephone network in such a way that each telephone connection passes through at least one such central network element which forwards the VoIP packets passing through it exactly at the time interval that matches the duration of the respective voice signal contained therein.

11. The method according to claim 10, wherein the central network elements forwarding the VoIP packets passing through them exactly at the time interval that matches the duration of the respective voice signal contained therein do so in accordance with the central clock signal such that the time base for the time interval between all the VoIP packets transmitted or forwarded by these central network elements, in each case at the time interval that matches the duration of the respective voice signal contained therein, is identical.

12. The method according to one of the preceding claims, wherein several central network elements are distributed over IP-based telephone networks of different network operators and synchronize with each other.

13. The method according to one of claims 6 to 10, wherein multiple central network elements (15, 17) are connected via network transitions to other network technologies and synchronize themselves according to one of the preceding claims or in some other way to a common time base for deriving the transmission clock signal for digitizing the voice signals.

14. The method according to claim 13, wherein the other network technologies are selected from the group consisting of PSTN, mobile radio, proprietary or standardized network or transmission systems for transmitting telephony or other real-time-based voice transmission.

15. The method according to one of the preceding claims, wherein a transmitting terminal which generates the transmission clock signal for sampling analog voice signals to be digitized for transmission in the IP-based telephone network uses for said transmission clock signal the same clock signal it has generated as the clock signal for the transmission clock signal for converting the voice signals digitized for transmission in the IP-based telephone network back into analog voice signals according to claims 1 to 4.

16. The method according to claim 1, wherein the terminals negotiate during the connection establishment which side acts as clock signal generator when no central clock signal is received.

17. The method according to claim 1, wherein synchronization is effected by externally supplying the transmission clock signal from a high-precision central clock signal to the first and second terminal (11, 12) which generate the transmission clock signal for sampling analog voice signals to be digitized for transmission into the telephone network and for converting digital voice signals received from the IP-based telephone network back into analog voice signals.

18. The method according to claim 17, wherein the central clock signal is transmitted and supplied via radio.

19. The method according to claim 18, wherein the radio signal is transmitted by a system selected from the group consisting of DCF77, GPS, respective GSM, UMTS or LTE radio network of a single mobile operator.

20. The method according to claim 17, wherein the central clock signal is supplied by a centrally clocked carrier signal of a wired transmission system.

21. The method according to claim 20, wherein a system from the group consisting of SDH, synchronous Ethernet, DSL is selected as the wired transmission system.

22. The method according to claim 17, wherein the central clock signal is supplied through another central clock signal.

23. The method according to claim 1, wherein the synchronization takes place by buffering all received VoIP packets and, if necessary, replacing lost VoIP packets with self-generated VoIP packets containing a voice signal of the same length, and further processing these IP packets in such a way that the original signal is transmitted without error due to a clock signal difference between the first and the second terminal.

24. The method according to claim 23, wherein received voice signals from VoIP packets are processed by digital signal processing such that the received signals are not subjected to a local clock signal but can be fully processed in the transmission clock signal in which they are received.

25. An IP-based telephone network (1) designed to perform a method according to any one of claims 1 to 24.

## Revendications

1. Procédé de transmission de données à l'aide de tonalités de modem dans un signal vocal dans un réseau téléphonique basé sur IP (1) ayant une pluralité d'éléments de réseau via une connexion entre au moins un premier terminal (11) et au moins un second terminal (12), les données étant converties en tonalités de modem, ces tonalités de modem étant échantillonnées au moyen d'un signal d'horloge de transmission à travers une numérisation du signal vocal dans des convertisseurs analogiques-numériques disposés dans chaque cas sur les terminaux, les valeurs d'échantillonnage résultantes étant transmises en paquets VoIP via la connexion entre au moins un premier terminal et au moins un second terminal et reconverties en tonalités de modem par des convertisseurs numériques-analogiques disposés dans chaque cas sur les terminaux, les convertisseurs analogiques-numériques et les convertisseurs numériques-analogiques disposés dans chaque cas sur les terminaux étant synchronisés avec le signal d'horloge de transmission, la synchronisation étant effectuée par le second terminal lequel, en tant que terminal recevant les paquets VoIP, génère le signal d'horloge de transmission pour convertir le signal vocal numérisé pour une transmission dans le réseau téléphonique basé sur IP en un signal vocal analogique et détermine ce signal d'horloge de transmission à partir du nombre et du moment de l'arrivée des valeurs d'échantillon du signal vocal numérisé et se synchronise ainsi avec les paquets VoIP de la connexion reçus.

2. Procédé selon la revendication 1, le signal d'horloge de transmission étant calculé à partir d'un intervalle de temps moyen mesuré entre les paquets VoIP reçus et du nombre de valeurs d'échantillon du signal vocal contenu respectivement dans les paquets VoIP reçus.

3. Procédé selon la revendication 2, une fréquence du signal d'horloge de transmission étant calculée à partir du nombre de valeurs d'échantillon du signal vocal contenu respectivement dans les paquets VoIP reçus divisé par l'intervalle de temps moyen mesuré entre les paquets VoIP reçus.

4. Procédé selon la revendication 3, le calcul de la moyenne de l'intervalle de temps des paquets VoIP reçus étant effectué dans une mémoire-gigue de sorte à réajuster très lentement le signal d'horloge de transmission généré par le terminal de réception dans une boucle de contrôle en fonction du nombre de valeurs d'échantillon entrantes dans les paquets VoIP entrants, de sorte que la mémoire-gigue ne tourne ni à vide ni n'est débordée.

5. Procédé selon l'une des revendications précédentes, les paquets VoIP perdus étant remplacés dans le terminal de réception par des paquets VoIP auto-générés contenant un signal vocal de la même longueur.

6. Procédé selon l'une des revendications précédentes, un élément de réseau central par lequel passe une pluralité de connexions téléphoniques et par lequel passent respectivement tous les paquets VoIP desdites connexions téléphoniques, tamponnant tous les paquets VoIP qui passent par l'élément de réseau central afin de les retransmettre tous selon un signal d'horloge central de sorte à synchroniser le signal d'horloge de transmission de chaque connexion téléphonique individuelle qui passe par ledit élément de réseau central avec le signal d'horloge central selon un procédé de numérisation sélectionné respectif.

7. Procédé selon la revendication 6, l'élément de réseau central transmettant les paquets VoIP de manière synchronisée avec le signal d'horloge central selon le signal d'horloge de transmission de la connexion téléphonique respective selon le procédé de numérisation sélectionné respectif, à l'aide du signal d'horloge central en tant que base de temps pour transmettre les paquets VoIP devant être transmis exactement à l'intervalle de temps correspondant à la durée du signal vocal contenu dans les paquets VoIP respectifs.

8. Procédé selon la revendication 6 ou 7, un quelconque élément de réseau contenu dans le réseau téléphonique basé sur IP étant sélectionné comme élément central, qui est configuré pour analyser les paquets VoIP de passage de sorte que ledit élément de réseau ait connaissance de la durée du signal vocal y contenu.

9. Procédé selon la revendication 8, l'élément de réseau étant sélectionné dans le groupe constitué par le relais RTP, SBC, BGF, la passerelle vocale.

10. Procédé selon l'une des revendications 6 à 9, une pluralité d'éléments de réseau centraux existant dans le réseau téléphonique basé sur IP et étant répartis dans le réseau téléphonique basé sur IP de sorte à faire passer chaque connexion téléphonique par au moins un élément de réseau central qui retransmet les paquets VoIP qui y passent exactement à l'intervalle de temps qui correspond à la durée du signal vocal respectif contenu dans les paquets.

11. Procédé selon la revendication 10, les éléments de réseau centraux retransmettent les paquets VoIP qui y passent exactement à l'intervalle de temps qui correspond à la durée du signal vocal respectif contenu dans les paquets, et ce conformément au signal d'horloge central de sorte que, dans chaque cas, la base de temps pour l'intervalle de temps de tous les paquets VoIP transmis ou retransmis par ces éléments de réseau centraux à l'intervalle de temps correspondant à la durée du signal vocal respectif contenu dans les paquets soit identique.

12. Procédé selon l'une des revendications précédentes, plusieurs éléments de réseau centraux étant répartis sur des réseaux téléphoniques basés sur IP de différents opérateurs de réseau et se synchronisant les uns avec les autres.

13. Procédé selon l'une des revendications 6 à 10, de multiples éléments de réseau centraux (15, 17) étant connectés à travers des transitions de réseau à d'autres technologies de réseau et se synchronisant eux-mêmes selon l'une des revendications précédentes ou d'une autre manière avec une base de temps commune pour dériver le signal d'horloge de transmission pour numériser les signaux vocaux.

14. Procédé selon la revendication 13, les autres technologies de réseau étant sélectionnées dans le groupe constitué par le RTPC, la radio mobile, les systèmes de réseau ou de transmission propriétaires ou normalisés pour transmettre la téléphonie ou autre transmission vocale en temps réel.

15. Procédé selon l'une des revendications précédentes, un terminal de transmission générant le signal d'horloge de transmission pour échantillonner des signaux vocaux analogiques à numériser pour transmission dans le réseau téléphonique basé sur IP, utilise pour ledit signal d'horloge de transmission le même signal d'horloge qu'il a généré comme signal d'horloge pour le signal d'horloge de transmission afin de convertir les signaux vocaux numérisés pour transmission dans le réseau téléphonique basé sur IP en signaux vocaux analogiques selon les revendications 1 à 4.

16. Procédé selon la revendication 1, les terminaux négociant, pendant l'établissement de la connexion, le côté qui doit servir de générateur de signal d'horloge quand aucun signal d'horloge central n'est reçu.

17. Procédé selon la revendication 1, la synchronisation étant effectuée par fourniture externe du signal d'horloge de transmission provenant d'un signal d'horloge central de haute précision aux premier et second terminaux (11, 12), qui génèrent le signal d'horloge de transmission pour échantillonner les signaux vocaux analogiques à numériser pour transmission dans le réseau téléphonique et pour convertir les signaux numériques provenant du réseau téléphonique basé sur IP en signaux vocaux analogiques.

18. Procédé selon la revendication 17, le signal d'horloge centrale étant transmis et fourni par radio.

19. Procédé selon la revendication 18, le signal radio étant transmis par un système sélectionné dans le groupe constitué par le DCF77, le GPS, le GSM, l'UMTS ou le réseau radio LTE respectif d'un seul opérateur mobile.

20. Procédé selon la revendication 17, le signal d'horloge central étant fourni par un signal porteur synchronisé de manière centrale d'un système de transmission filaire.

21. Procédé selon la revendication 20, un système du groupe constitué par la HNS, l'Ethernet synchrone, la DSL étant sélectionnée en tant que système de transmission filaire.

22. Procédé selon la revendication 17, le signal d'horloge central étant fourni par un autre signal d'horloge central.

23. Procédé selon la revendication 1, la synchronisation étant effectuée par mise en mémoire tampon de tous les paquets VoIP reçus et, si nécessaire, par remplacement des paquets VoIP perdus par des paquets VoIP auto-générés contenant un signal vocal de même longueur, et par traitement ultérieur de ces paquets IP de sorte à transmettre le signal original sans erreur due à une différence de signal d'horloge entre les premier et second terminaux.

24. Procédé selon la revendication 23, les signaux vocaux reçus des paquets VoIP étant traités par traitement de signaux numériques de sorte à ne pas soumettre les signaux reçus à un signal d'horloge locale, mais à les traiter entièrement dans le signal d'horloge de transmission dans lequel ils sont reçus.

25. Réseau téléphonique basé sur IP (1) conçu pour exécuter un procédé selon l'une quelconque des revendications 1 à 24.
